# EUROPÄISCHE PATENTANMELDUNG

(11) **EP 4 191 756 A1**
(43) Veröffentlichungstag der Anmeldung: **07.06.2023**
(21) Anmeldenummer: 21211580.2
(22) Anmeldetag: 01.12.2021
(51) Int. Cl.: H01M 50/136, H01M 50/143, H01M 50/238, H01M 50/242

(54) **ENERGIEVERSORGUNGSVORRICHTUNG MIT EINER ZELLE OHNE ÜBERDRUCKVENTIL UND WERKZEUGMASCHINE MIT EINER SOLCHEN ENERGIEVERSORGUNGSVORRICHTUNG**

(71) Anmelder: Hilti Aktiengesellschaft, 9494 Schaan (LI)
(72) Erfinder: Stanger, Robert, 87600 Kaufbeuren (DE); Guggemos, Andreas, 86825 Bad Wörishofen (DE); Müller, Sabrina, 82272 Moorenweis (DE)
(74) Vertreter: Hilti Aktiengesellschaft Corporate Intellectual Property

(57) **Zusammenfassung**

Die vorliegende Erfindung betrifft eine Energieversorgungsvorrichtung, insbesondere für eine Werkzeugmaschine, wobei die Energieversorgungsvorrichtung mindestens einer Zelle umfasst und wobei mindestens eine Zelle der Energieversorgungsvorrichtung kein Überdruckventil aufweist. Darüber hinaus kann die mindestens eine Zelle zumindest abschnitts- oder bereichsweise eine flexible Außenhülle aufweisen. Die mindestens eine Zelle kann eine Mantelfläche oder ein Volumen aufweisen, wobei eine Größe der Mantelfläche oder des Volumens in Abhängigkeit von Zell-Parametern veränderbar ist. In einem zweiten Aspekt betrifft die Erfindung eine Werkzeugmaschine mit einer vorgeschlagenen Energieversorgungsvorrichtung.

## Beschreibung

Die vorliegende Erfindung betrifft eine Energieversorgungsvorrichtung, insbesondere für eine Werkzeugmaschine, wobei die Energieversorgungsvorrichtung mindestens einer Zelle umfasst und wobei mindestens eine Zelle der Energieversorgungsvorrichtung kein Überdruckventil aufweist. Darüber hinaus kann die mindestens eine Zelle zumindest abschnitts- oder bereichsweise eine flexible Außenhülle aufweisen. Die mindestens eine Zelle kann eine Mantelfläche oder ein Volumen aufweisen, wobei eine Größe der Mantelfläche oder des Volumens in Abhängigkeit von Zell-Parametern veränderbar ist. In einem zweiten Aspekt betrifft die Erfindung eine Werkzeugmaschine mit einer vorgeschlagenen Energieversorgungsvorrichtung.

### Hintergrund der Erfindung:

Die Erfindung ist im technischen Gebiet der Werkzeugmaschinen angesiedelt. In diesem technischen Gebiet kommen zunehmend kabellose Werkzeugmaschinen zum Einsatz, die über Energieversorgungsvorrichtungen, wie Akkumulatoren ("Akkus") oder wiederaufladbare Batterien mit elektrischer Energie oder Strom versorgt werden. Üblicherweise weisen die Energieversorgungsvorrichtungen der Werkzeugmaschinen Batteriepacks mit Zellen auf, die preiswert in der Herstellung sind und in standardisierten Größen hergestellt werden können. Solche Zellen können verschiedene Grundformen aufweisen, wobei die Zellen in der Regel starre, unverformbare Außenwände aufweisen. Die Zellen von konventionellen Energieversorgungsvorrichtungen, wie sie aus dem Stand der Technik bekannt sind, weisen üblicherweise ein druckbasiert arbeitendes Überdruckventil auf, das häufig zweistufig ausgebildet ist. Im Englischen werden solche Überdruckventile als current interruptive device (CID) bezeichnet. Das Überdruckventil der Zellen ist dazu eingerichtet, in bestimmten, als kritisch erachteten Situationen die Zellen selbständig zu deaktivieren. Das kann beispielsweise dadurch geschehen, dass die Zellen hochohmig geschaltet werden. In einem zweiten Schritt der Deaktivierung der Zelle kann die Zelle von dem Überdruckventil geöffnet werden, um einen Innendruck der Zelle abzuführen bzw. zu reduzieren.

Bei einigen Zellen mit starren Außenwänden wird ein Platzen der Zell-Außenwände beobachtet, wenn es zu unerwünschten chemischen Reaktionen und Prozessen oder Temperaturschwankungen innerhalb der Zelle kommt. Es sind auch solche Fälle bekannt geworden, bei denen Zellen im Bereich des Überdruckventils Beschädigungen aufwiesen. Eine Energieversorgungsvorrichtung mit einer solchen defekten Zelle ist für den Einsatz in einer Werkzeugmaschine unbrauchbar und muß aufwändig entsorgt werden.

Bei Werkzeugmaschinen, die beispielsweise für schwere Arbeiten auf einer Baustelle eingesetzt werden, sollen die Energieversorgungsvorrichtungen möglichst kompakt und handlich ausgebildet sein, um möglichst ebensolche Werkzeugmaschinen bereitstellen zu können. Die Aufgabe, die der vorliegenden Erfindung zugrunde liegt, besteht darin, die vorstehend beschriebenen Mängel und Nachteile des Standes der Technik zu überwinden und eine Energieversorgungsvorrichtung, insbesondere für eine Werkzeugmaschine, bereitzustellen, bei der die besonders kompakt und handlich ausgebildet ist. Darüber hinaus ist ein Anliegen der vorliegenden Erfindung, eine robuste Energieversorgungsvorrichtung anzugeben, die thermischen Belastungen sicher Stand hält. Die Fachwelt würde es ferner begrüßen, wenn die Wärmeabgabe der Zellen an ihre Umgebung bzw. die Kühlfähigkeit der Zellen bzw. der Energieversorgungsvorrichtung mit der Erfindung verbessert werden könnte. Ein weiteres Anliegen der Erfindung besteht darin, eine Energieversorgungsvorrichtung bereitzustellen, mit der insbesondere hohe Entladeströmen an eine Werkzeugmaschine ermöglicht werden können. Darüber hinaus soll eine Werkzeugmaschine mit einer entsprechenden Energieversorgungsvorrichtung angegeben werden, wobei die Werkzeugmaschine ebenfalls besonders kompakt und handlich ausgebildet sein soll.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Energieversorgungsvorrichtung, insbesondere für eine Werkzeugmaschine, vorgesehen, wobei die Energieversorgungsvorrichtung mindestens einer Zelle umfasst und wobei mindestens eine Zelle der Energieversorgungsvorrichtung kein Überdruckventil aufweist. Das bedeutet im Sinne der Erfindung bevorzugt, dass die Zelle der Energieversorgungsvorrichtung kein Überdruckventil aufweist, wenn die Energieversorgungsvorrichtung genau eine Zelle umfasst. Es ist im Sinne der Erfindung allerdings bevorzugt, dass die Energieversorgungsvorrichtung mehr als eine Zelle aufweist, beispielweise sechs, zwölf oder achtzehn Zellen. In diesem Fall weist mindestens eine Zelle der Energieversorgungsvorrichtung kein Überdruckventil auf. Es kann im Sinne der Erfindung aber auch bevorzugt sein, dass mehr als eine Zelle kein Überdruckventil aufweist. Es kann im Sinne der Erfindung auch bevorzugt sein, dass keine der Zellen der Energieversorgungsvorrichtung Überdruckventil aufweisen. Das Weglassen von mindestens einem Überdruckventil führt vorzugsweise dazu, dass eine besonders kompakte und handliche Energieversorgungsvorrichtung bereitgestellt werden kann. Wenn keine der Zellen der Energieversorgungsvorrichtung ein Überdruckventil aufweist, kann vorteilhafterweise eine noch kompaktere Energieversorgungsvorrichtung bereitgestellt werden. In diesem Fall weist die Energieversorgungsvorrichtung als Ganzes kein Überdruckventil auf.

Durch das Weglassen einer Komponente, die nur in sehr wenigen Ausnahmesituationen aktiviert wird, kann bei gleichbleibendem Volumen der Energieversorgungsvorrichtung mehr chemisch aktives Energieversorgungsmaterial untergebracht werden und dadurch die Energiedichte der Energieversorgungsvorrichtung wesentliche erhöht werden. Beispielsweise können mit der Erfindung und dem Weglassen der Überdruckventile Energiedichten erreicht werden, die ca. 5-10 % höher liegen als die Energiedichten von konventionellen Energieversorgungsvorrichtungen, wie sie aus dem Stand der Technik bekannt sind. Die Energiedichte kann beispielsweise in der Einheit Wattstunde pro Liter (Wh/I) angegeben werden, wobei die Einheit «Liter» in diesem Falle das Raummaß beschreibt bzw. das Volumen, das die Energieversorgungsvorrichtung einnimmt.

Darüber hinaus können durch das Weglassen der Überdruckventile die Herstellungskosten der Energieversorgungsvorrichtungen gesenkt werden. Die Funktion des Überdruckventils kann beispielsweise von einer Elektronik der Energieversorgungsvorrichtung übernommen werden. Auf diese Weise kann Bauraum eingespart werden, ohne auf die Funktion des Überdruckventils und die damit einhergehende Betriebssicherheit zu verzichten.

Es ist im Sinne der Erfindung bevorzugt, dass die mindestens eine Zelle der Energieversorgungsvorrichtung zumindest abschnitts- oder bereichsweise eine flexible Außenhülle aufweist. Durch die flexible Außenhülle ist die mindestens eine Zelle der vorgeschlagenen Energieversorgungsvorrichtung dazu eingerichtet, zu «atmen», d.h. etwaigen Volumenveränderungen des Inneren der Zelle zu folgen. Dadurch kann vorteilhafterweise ein unerwünschtes eruptives Aufplatzen der Zellen im Inneren der Energieversorgungsvorrichtung vermieden werden. Tests haben gezeigt, dass eine Wärmeabgabe der Zellen durch die flexible Außenhülle und die dadurch möglichen Volumenänderungen der Zelle wesentlich verbessert werden kann. Außerdem hat sich gezeigt, dass Energieversorgungsvorrichtungen, bei denen die Zellen zumindest abschnitts- oder bereichsweise eine flexible Außenhülle aufweisen, besonders für den Einsatz in solchen Werkzeugmaschinen geeignet sind, die einen hohen Leistungsbedarf haben und daher eines hohen Entladestroms bedürfen.

Tests haben gezeigt, dass eine Kombination von Zellen ohne Überdruckventil, aber mit abschnitts- oder bereichsweise eine flexible Außenhülle besonders vorteilhafte thermische Eigenschaften haben und besonders gut abgekühlt werden können. Darüber hinaus weisen Energieversorgungsvorrichtungen mit solchen flexiblen Zellen ohne CID eine besonders hohe Leistungsdichte im Vergleich zu konventionellen Energieversorgungsvorrichtungen auf, so dass besonders leistungsstarke Energieversorgungsvorrichtungen bereitgestellt werden können, die besonders gut für den Einsatz in solchen Werkzeugmaschinen geeignet sind, mit denen leistungsintensive Anwendungen durchgeführt werden. Dabei übersteigen die Verbesserungen bei den thermischen Eigenschaften und bei der Leistungsdichte bei den Zellen mit flexibler Außenhülle und ohne Überdruckventil die Erwartungen, die durch die Einzelmaßnahmen ("flexible Außenhülle" oder "kein Überdruckventil") begründet gewesen wären.

Es ist im Sinne der Erfindung bevorzugt, dass die mindestens eine Zelle eine Mantelfläche aufweist, wobei eine Größe der Mantelfläche in Abhängigkeit von Zell-Parametern veränderbar ist. Die Mantelfläche der Zelle kann vorzugsweise von ihren Außenwänden gebildet werden. Es kann im Sinne der Erfindung bevorzugt sein, dass die mindestens eine Zelle eine im Wesentlichen zylinder- oder quaderförmige Grundform aufweist. Wenn die Zelle eine im Wesentlichen zylindrische Grundform aufweist, kann die Mantelfläche der Zelle beispielsweise von dem Mantel, der die zylindrische Grundform umgibt, gebildet werden. Auch eine Unterseite und/oder eine Oberseite der Zelle können zur Mantelfläche der Zelle gezählt werden. Es ist im Sinne der Erfindung bevorzugt, dass die Oberseite und die Unterseite der Zelle vorzugsweise parallel zueinander verlaufen und an gegenüberliegenden Seiten der vorzugsweise zylindrisch geformten Zelle angeordnet sind.

Wenn die Zelle eine quaderförmige Grundform aufweist, kann die Zelle von bevorzugt sechs Außenwänden umgeben werden, wobei je zwei Seitenflächen des Quaders parallel zueinander ausgebildet sind und sich vorzugsweise auf gegenüberliegenden Seiten der bevorzugt quaderförmigen Zelle befinden. Beispielsweise kann eine Zelle mit im Wesentlichen quaderförmiger Grundform sich gegenüberliegende Ober- und Unterseiten, sich gegenüberliegende Seitenflächen und sich gegenüberliegende Vorder- und Rückseiten aufweisen. Der Begriff «im Wesentlichen» ist für den Fachmann kein unklarer Begriff, da der Fachmann weiß, dass die Zelle beispielsweise abgerundete Kanten oder Ecken aufweisen kann, ohne dass eine beispielsweise quaderförmige Zelle mit abgerundeten Ecken oder Kanten dadurch ihre «im Wesentlichen quaderförmige Form» verliert. Dasselbe gilt analog für «im Wesentlichen zylinderförmige Zellen», die ebenfalls abgerundete Kanten oder Ecken aufweisen kann, ohne ihre zylinderförmige Anmutung zu verlieren.

Die Formulierung, dass Zelle «zumindest abschnitts- oder bereichsweise eine flexible Außenhülle» aufweist, bedeutet im Sinne der Erfindung bevorzugt, dass die Zelle ganz oder teilweise von einem flexiblen Außenmaterial umgeben ist. Beispielsweise können einzelne Außenwände oder Außenflächen der Zelle flexibel ausgebildet sein oder eine elastisches Material umfassen. Wenn die Zelle eine im Wesentlichen zylindrische Grundform aufweist, kann beispielsweise die hohlzylinderförmige Außenwand der Zelle flexibel ausgebildet sein bzw. von einem flexiblen, vorzugsweise elastischem, Material gebildet werden, während die Ober- und Unterseite der Zelle beispielsweise aus einem festen und/oder starren Material ausgebildet sind. Wenn die Zelle eine quaderförmige Grundform aufweist, können beispielsweise einzelne Seitenflächen, wie Ober- oder Unterseite oder eine Seitenwand oder mehrere Seitenwände flexibel ausgebildet sein bzw. von einem flexiblen, vorzugsweise elastischem, Material gebildet werden. Es kann im Sinne der Erfindung auch bevorzugt sein, dass Unterabschnitte oder Unterbereiche einzelner Außenwand-Flächen der Zelle flexibel ausgebildet sind oder von einem flexiblen, vorzugsweise elastischem, Material gebildet werden. Es kann im Sinne der Erfindung darüber hinaus bevorzugt sein, dass die Zelle vollständig von einer flexiblen Außenhülle umgeben ist, wobei die flexible Außenhülle vorzugsweise von einem flexiblen, vorzugsweise elastischem, Material gebildet wird.

Wenn sich die Größe der Mantelfläche der Zelle in Abhängigkeit von Zell-Parametern verändert, können vorzugsweise insbesondere die flexibel ausgebildeten Bereiche, Abschnitte und/oder Flächen der Zelle ihre Form oder ihre Ausdehnung ändern. Beispielsweise kann die Zelle ihr Volumen im Wesentlichen gleichmäßig in alle Raumrichtungen ausdehnen. Dies kann beispielsweise der Fall sein, wenn die Zelle im Wesentlichen vollständig von einem flexiblen Material gebildet wird. Wenn die Zelle teilweise von einem flexiblen Material gebildet wird, kann es im Sinne der Erfindung bevorzugt sein, dass sich die Zelle nur in eine oder zwei Raumrichtungen ausdehnt oder dass die Ausdehnung der Zelle ungleichmäßig in die unterschiedlichen Raumrichtungen erfolgt. Vorzugsweise besteht bei der vorgeschlagenen Energieversorgungsvorrichtung ein Zusammenhang zwischen der Ausgestaltung der Zelle in Bezug auf die Anordnung des flexiblen Materials und der Ausdehnungsfähigkeit der Zelle. Mit anderen Worten kann sich die Zelle in Abhängigkeit von einer Verteilung und/oder Anordnung von flexiblen Bereichen oder flexiblem Material im Bereich der Außenhülle der Zelle ausdehnen. Vorzugsweise kann sich bei der vorgeschlagenen Energieversorgungsvorrichtung auch ein Volumen der mindestens einen Zelle ändern.

Durch die Veränderung der Mantelfläche und/oder des Volumens der mindestens einen Zelle kann sich vorteilhafterweise das thermische Verhalten bzw. eine Robustheit der Zelle bzw. der Energieversorgungsvorrichtung verbessern. Insbesondere kann durch die Vergrößerung von Volumen und/oder Mantelfläche der Zelle mehr Wärme an die Umgebung der Zelle abgegeben werden, so dass die Zelle besser gekühlt werden kann. Die Abgabe der Wärme kann beispielsweise durch Strahlung und/oder Konvektion erfolgen.

Beispielsweise können sich das Volumen und/oder die Mantelfläche der Zelle ändern, wenn sich die Temperatur und/oder der Druck im Inneren der Zelle ändern. Es kann im Sinne der Erfindung bevorzugt sein, dass sich die Mantelfläche und/oder das Volumen der Zelle bei einer Erhöhung der Temperatur in einem Inneren der mindestens einen Zelle vergrößem. Alternativ oder ergänzend kann es bevorzugt sein, dass sich die Mantelfläche und/oder das Volumen bei einer Erhöhung des Drucks in einem Inneren der mindestens einen Zelle vergrößem. Analog kann sich das Volumen und/oder die Mantelfläche verkleinem, wenn sich Temperatur und/oder Druck innerhalb der Zellen verringern. Es ist im Sinne der Erfindung bevorzugt, dass die hohen Entladeströme, die bei Betrieb einer Werkzeugmaschine, mit der die vorgeschlagene Energieversorgungsvorrichtung verbunden werden kann, fließen, zu einer Erhöhung der Temperatur im Inneren der mindestens einen Zelle der Energieversorgungsvorrichtung führen können. Die erhöhten Temperaturen können ihrerseits zu Druckveränderungen innerhalb der Zelle führen, wobei Temperaturerhöhungen vorzugsweise zu Druckerhöhungen führen und reduzierte Temperaturen zu reduzierten Drücken.

Neben Temperatur- und/oder Druckveränderungen können auch chemische Reaktionen oder chemische Prozesse zu Veränderungen des Volumens und/oder der Mantelfläche der Zelle führen. Solche chemischen Reaktionen oder Prozesse werden im Sinne der Erfindung als «chemische Parameter» bezeichnet, in Abhängigkeit derer sich die Mantelfläche und/oder das Volumen der Zelle aufgrund ihrer flexiblen Außenstruktur verändern kann. Vorzugsweise können die Zell-Parametern, in Abhängigkeit derer sich das Volumen und/oder die Mantelfläche der mindestens einen Zelle ändert, ausgewählt sein aus einer Gruppe umfassend Temperatur, Druck und/oder chemische Parameter, ohne darauf beschränkt zu sen.

Es ist im Sinne der Erfindung bevorzugt, dass die mindestens eine Zelle mit flexibler Außenhülle im Laufe ihrer Lebenszeit ihr Volumen ändert. Vorzugsweise vergrößert sich das Volumen der mindestens einen Zelle mit jedem Entladevorgang. Die entsprechende Vergrößerung des Volumens der mindestens einen Zelle kann beispielsweise bei 500 Lade- und Entladezyklen in einem Bereich von 10 % liegen. Das bedeutet im Sinne der Erfindung bevorzugt, dass die mindestens eine Zelle in einem Neuzustand ein Volumen aufweist, wobei dem Neu-Volumen der ein Prozentsatz von 100 % zugeordnet werden kann. Nach der Durchführung von 500 Lade- und Entladezyklen gemäß dem obigen Beispiel kann die mindestens eine Zelle anschließend ein geändertes Volumen von ca. 110 % des ursprünglichen Volumens im Neu-Zustand aufweisen.

Es ist im Sinne der Erfindung bevorzugt, dass die Mantelfläche in einem Bereich von +/- 12 %, bevorzugt einem Bereich +/- 8 % und besonders bevorzugt in einem Bereich +/- 5 % in Bezug auf eine Referenz-Mantelfläche veränderbar ist. Analog dazu kann es bevorzugt sein, dass sich das Volumen der Zelle in einem Bereich von +/- 12 %, bevorzugt einem Bereich +/- 8 % und besonders bevorzugt in einem Bereich +/- 5 % in Bezug auf ein Referenz-Volumen verändert.

Eine mögliche Referenz-Mantelfläche kann die Mantelfläche der mindestens einen Zelle im kalten Zustand sein, also beispielsweise bei Raumtemperatur, wobei die Raumtemperatur beispielsweise bei 20 °C liegen kann. Analog dazu kann ein mögliches Referenz-Volumen das Volumen der mindestens einen Zelle im kalten Zustand oder bei Raumtemperatur sein. Beispielsweise kann auch eine Zelle im Neuzustand bzw. in einem ungealterten Zustand als Referenzquelle verwendet werden. Diese Neuzustandsdaten sind üblicherweise bekannt und schriftlich fixiert, so dass sie beispielsweise in der Energieversorgungsvorrichtung hinterlegt werden können. Es kann aber im Sinne der Erfindung auch bevorzugt sein, eine andere Referenz-Mantelfläche oder ein anderes Referenz-Volumen zu verwenden oder vor und/oder während einer Verwendung der Energieversorgungsvorrichtungen Messungen mit einer geeigneten Sensorik durchzuführen, um tagesaktuelle Referenzwerte zu erhalten. Mögliche Referenzwerte für die Mantelfläche und/oder das Volumen können vorzugsweise in einer Steuervorrichtung und/oder in einer Steuerelektronik der Energieversorgungsvorrichtung und/oder der Werkzeugmaschine hinterlegt sein.

Es ist im Sinne der Erfindung bevorzugt, dass die flexible Außenhülle ein elastisches Material umfasst. Beispielsweise kann die flexible Außenhülle Aluminium umfassen oder aus Aluminium gebildet sein. Auch Aluminium-Legierungen, als Legierungen, die einen Anteil von Aluminium umfassen, können als elastisches Material zur Bildung der flexiblen Außenhülle verwendet werden.

Die Erfindung ermöglicht vorteilhafterweise die Bereitstellung einer Energieversorgungsvorrichtung mit mindestens einer Zellen, die eine verringerte Erwärmung bzw. verbesserte Kühlfähigkeit aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der Energieversorgungsvorrichtung und kann auf diese Weise keinen großen thermischen Schaden anrichten. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Vorzugsweise ist die Energieversorgungsvorrichtung dazu eingerichtet, einen Entladestrom über wenigstens 10 s von wenigstens 20 A bereitzustellen. Beispielsweise kann die Energieversorgungsvorrichtung dazu ausgebildet sein, einen Entladestrom über wenigstens 10 s von wenigstens 20 A, insbesondere wenigstens 25 A, bereitzustellen. Mit anderen Worten kann der Akkumulator eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung des Akkumulators führen können. Daher ist ein Akkumulator mit einer leistungsstarken Kühlung, wie sie durch die vorliegend beschriebenen Maßnahmen erzielt werden kann, besonders vorteilhaft. Denkbar ist beispielsweise, dass der Akkumulator über 1 Sekunde hinweg wenigstens 50 A bereitstellen kann. Mit anderen Worten ist es im Sinne der Erfindung bevorzugt, dass die Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, die einen derartigen Spitzenstrom und/oder einen derartigen Dauerstrom bereitzustellen vermag, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 20 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein. Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Um eine Überhitzung des Akkumulators zu vermeiden, kann vorgesehen sein, dass wenn die Temperatur eine Grenztemperatur erreicht oder überschreitet, die Laderate reduziert und/oder der Ladevorgang unterbrochen wird. Die Grenztemperatur kann beispielsweise zwischen 70 °C und 95 °C, insbesondere bei 80 °C, liegen. Die Laderate kann auf 1 C oder weniger reduziert werden. Beispielsweise kann sie auf höchstens 0,5 C reduziert werden. Die Reduktion der Laderate beziehungsweise die Unterbrechung des Ladevorgangs, kann für eine bestimmte Zeitdauer erfolgen.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Achtfache des Kehrwerts der dritten Wurzel des Volumens. Die Formulierung, dass die Oberfläche A der mindestens einen Zelle ist größer ist als das Achtfache der dritten Wurzel des Quadrats des Volumens V kann vorzugsweise auch durch die Formel ***A***>**8******V***^(**2**/**3**) zum Ausdruck gebracht werden. Es kann im Sinne der Erfindung auch bevorzugt sein, dass das Verhältnis A/V von Oberfläche zu Volumen größer ist als das Zehnfache des Kehrwerts der dritten Wurzel des Volumens.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Innenwiderstand DCR_I von kleiner als 10 Milliohm (mOhm) aufweist. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist die vorgeschlagene Energieversorgungsvorrichtung besonders gut geeignet, um besonders leistungsstarke Werkzeugmaschinen mit elektrischer Energie zu versorgen. Die vorgeschlagene Energieversorgungsvorrichtung kann somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

In einem zweiten Aspekt betrifft die Erfindung eine Werkzeugmaschine mit einer vorgeschlagenen Energieversorgungsvorrichtung. Die für die Energieversorgungsvorrichtung eingeführten Begriffe, Definitionen und technischen Vorteile gelten vorzugsweise für die Werkzeugmaschine analog.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigen:
- Fig. 1: schematische Ansicht einer bevorzugten Ausgestaltung der Energieversorgungsvorrichtung
- Fig. 2: schematische Ansicht einer bevorzugten Ausgestaltung der Werkzeugmaschine
- Fig. 3: Stand der Technik: schematische Ansicht einer Energieversorgungsvorrichtung mit einer Zelle mit Überdruckventil
- Fig. 4: schematische Darstellung eines Vergleichs von Zellen, die aus dem Stand der Technik bekannt sind, mit Zellen ohne Überdruckventil.

### Ausführungsbeispiele und Figurenbeschreibung:

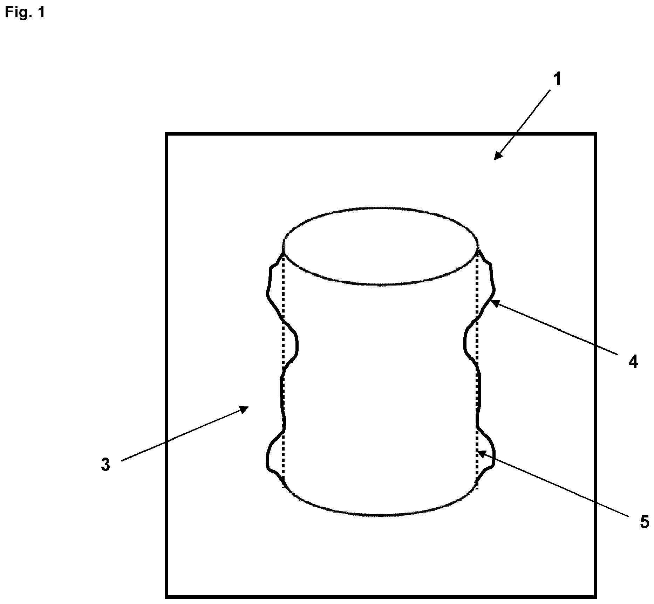

Figur 1 zeigt eine schematische Ansicht einer bevorzugten Ausgestaltung der Energieversorgungsvorrichtung 1. Die in Fig. 1 dargestellte Energieversorgungsvorrichtung 1 weist zur besseren Übersichtlichkeit genau eine Zelle 3 auf, wobei erfindungsgemäße Energieversorgungsvorrichtungen 1 beispielsweise sechs, zwölf oder achtzehn Zellen 3 aufweisen können, ohne darauf beschränkt zu sein. Bei der in Fig. 1 abgebildeten Zelle 3 handelt es sich um eine Zelle 3 mit einer im Wesentlichen zylinderförmigen Grundform. Die Zelle 3 weist eine Oberseite und eine Unterseite auf, wobei die Oberseite und die Unterseite im Wesentlichen parallel zueinander verlaufen und an gegenüberliegenden Seiten der Zelle 3 angeordnet sind («oben» und «unten»). Neben der Ober- und der Unterseite weist die in Fig. 1 abgebildete Zelle 3 eine Außenwand auf, die von einem Hohlzylinder gebildet wird. Diese Außenwand kann beispielsweise eine Mantelfläche der Zelle 3 bilden. In dem in Fig. 1 dargestellten Ausführungsbeispiel der Erfindung wird das Volumen der Zelle von der hohlzylinderförmigen Außenwand, sowie der Oberseite und der Unterseite der Zelle 3 eingeschlossen. Die Zelle 3, die in Fig. 1 darstellt ist, weist kein Überdruckventil 6 auf.

Die in Fig. 1 dargestellte Zelle 3 weist eine flexible Außenhülle 4 auf, wobei die flexible Außenhülle 4 der in Fig. 1 abgebildeten Zelle 3 insbesondere im Bereich der Mantelfläche der Zelle 3 angeordnet ist. Mit anderen Worten weist vor allem die Mantelfläche der Zelle 3 die flexible Außenhülle 4 auf. In dem im Fig. 1 abgebildeten Beispiel der Zelle 3 sind die Ober- und Unterseiten aus einem starren und/oder festen Material ausgebildet.

Im kalten Zustand kann die Zelle 3 ein minimales Volumen einnehmen oder eine minimale Mantelfläche aufweisen. Dieses Volumen bzw. diese Mantelfläche im kalten Zustand kann als Referenz-Volumen 5 oder als Referenz-Mantelfläche 5 verwendet werden, um Veränderungen der flexiblen Außenhülle 4 gegenüber einer Zelle 3 im kalten Zustand anzugeben.

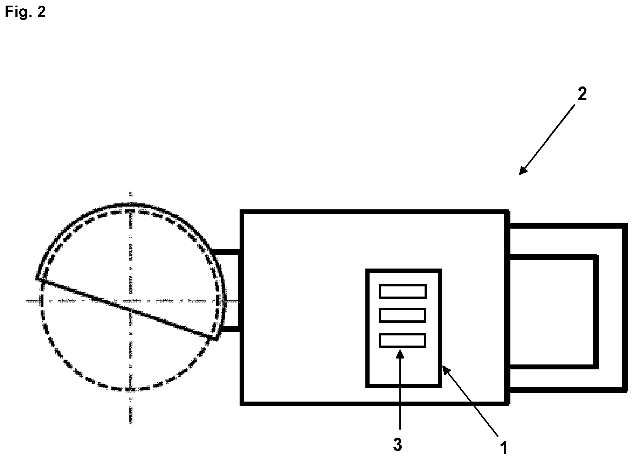

Fig. 2 zeigt eine schematische Ansicht einer bevorzugten Ausgestaltung der Werkzeugmaschine 2 mit einer vorgeschlagenen Energieversorgungsvorrichtung 1. Die in Fig. 2 dargestellte Energieversorgungsvorrichtung 1 weist beispielsweise drei Zellen 3 auf, wobei die flexible Außenhülle 4 der Zelle 3 in Fig. 2 nicht dargestellt ist. Bei der Werkzeugmaschine 2 kann es sich beispielsweise um einen Trennschleifer handeln, der als Werkzeug eine Trennscheibe aufweist. Die Werkzeugmaschine 2 kann einen Griff aufweisen, der als hinterer Handgriff ausgebildet ist. Darüber hinaus kann die Werkzeugmaschine 2 in an sich bekannter Weise Bedienelemente, wie Schalter oder Knöpfe, aufweisen. Außerdem kann die Werkzeugmaschine 2 einen Motor (nicht dargestellt) aufweisen, der einen Verbraucher darstellen und von der Energieversorgungsvorrichtung 1 mit elektrischer Energie versorgt werden kann. Keine der Zellen 3, die in Fig. 2 dargestellt werden, weist ein Überdruckventil 6 auf.

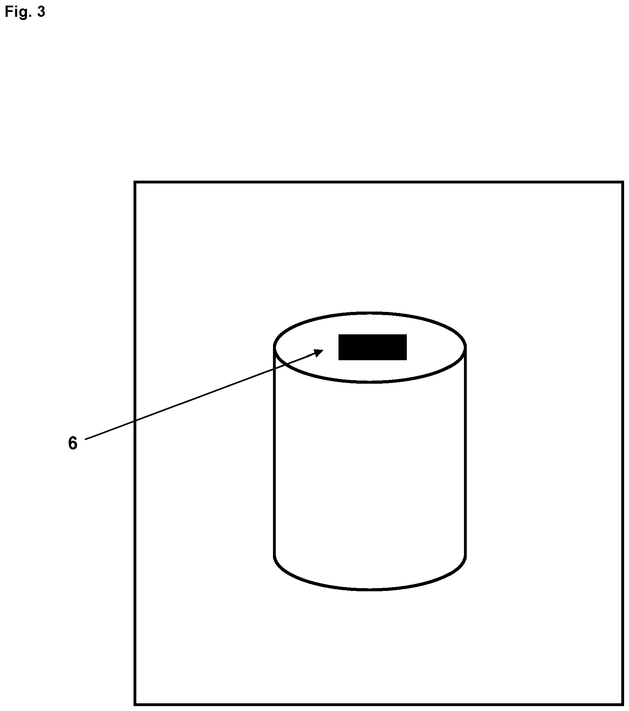

Fig. 3 zeigt eine Energieversorgungsvorrichtung, wie sie aus dem Stand der Technik bekannt ist. Die Zelle der Energieversorgungsvorrichtung weist eine starre, feste Außenstruktur auf. Auf der Oberseite der Zelle ist ein Überdruckventil 6 als Bestandteil der Zelle abgebildet. Fig. 3 zeigt eine Energieversorgungsvorrichtung, die nicht-erfindungsgemäß ausgebildet ist.

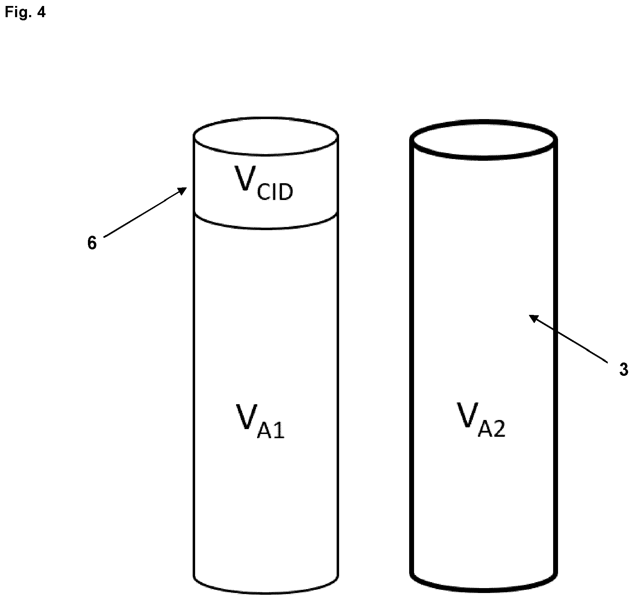

Fig. 4 zeigt eine schematische Darstellung eines Vergleichs von Zellen, die aus dem Stand der Technik bekannt sind, mit Zellen 3 ohne Überdruckventil 6. Auf der linken Seite von Fig. 4 ist eine zylindrische Zelle aus dem Stand der Technik abgebildet, die in ihrem oberen Bereich ein Überdruckventil 6 aufweist. Durch das Vorhandensein des Überdruckventils 6 ist bei gleichem Gesamt-Zellvolumen der Füllraum V_{A1}, der für chemisch aktives Material zur Verfügung steht, um das Volumen V_{CID} reduziert ist. Auf der rechten Seite von Fig. 4 ist schematisch eine bevorzugte Ausführungsform der vorgeschlagenen Zelle 3 ohne Überdruckventil 6 abgebildet. Hier stellt der Füllraum V_{A2}, der für chemisch aktives Material zur Verfügung steht, die Summe dar aus dem Füllraum V_{A1}, der bei konventionellen Zellen für chemisch aktives Material zur Verfügung steht, und dem Volumen V_{CID}, welches von dem Überdruckventil 6 eingenommen wird. Wie aus Fig. 4 hervorgeht, ist das Volumen V_{A2}, das erfindungsgemäß für chemisch aktives Material zur Verfügung steht, deutlich größer als das Volumen V_{A1}, der bei konventionellen Zellen für chemisch aktives Material zur Verfügung steht. Grund dafür ist das Weglassen des Überdruckventils 6 und die Ersetzung seiner Funktion durch elektronische Mittel.

### Bezugszeichenliste

- 1: Energieversorgungsvorrichtung
- 2: Werkzeugmaschine
- 3: Zelle
- 4: flexible Außenhülle
- 5: Referenz-Mantelfläche oder Referenz-Volumen der Zelle
- 6: Überdruckventil

## Patentansprüche

1. Energieversorgungsvorrichtung (1), insbesondere für eine Werkzeugmaschine (2), wobei die Energieversorgungsvorrichtung (1) mindestens einer Zelle (3) umfasst,
**dadurch gekennzeichnet, dass**
mindestens eine Zelle (3) der Energieversorgungsvorrichtung (1) kein Überdruckventil (6) aufweist.

2. Energieversorgungsvorrichtung (1) nach Anspruch 1
**dadurch gekennzeichnet, dass**
die mindestens eine Zelle (3) zumindest abschnitts- oder bereichsweise eine flexible Außenhülle (4) aufweist.

3. Energieversorgungsvorrichtung (1) nach Anspruch 1 oder 2
**dadurch gekennzeichnet, dass**
die mindestens eine Zelle (3) eine Mantelfläche aufweist, wobei eine Größe der Mantelfläche in Abhängigkeit von mindestens einem Zell-Parameter veränderbar ist.

4. Energieversorgungsvorrichtung (1) nach einem der vorhergehenden Ansprüche
**dadurch gekennzeichnet, dass**
die mindestens eine Zelle (3) ein Volumen aufweist, wobei eine Größe des Volumens in Abhängigkeit von mindestens einem Zell-Parameter veränderbar ist.

5. Energieversorgungsvorrichtung (1) nach Anspruch 3 oder 4
**dadurch gekennzeichnet, dass**
der mindestens eine Zell-Parameter ausgewählt ist aus einer Gruppe umfassend Temperatur, Druck und/oder chemische Parameter.

6. Energieversorgungsvorrichtung (1) nach einem der Ansprüche 3 bis 5
**dadurch gekennzeichnet, dass**
die Mantelfläche der mindestens einen Zelle (3) in einem Bereich von +/- 12 %, bevorzugt einem Bereich +/- 8 % und besonders bevorzugt in einem Bereich +/- 5 % in Bezug auf eine Referenz-Mantelfläche (5) veränderbar ist.

7. Energieversorgungsvorrichtung (1) nach einem der Ansprüche 4 bis 6
**dadurch gekennzeichnet, dass**
das Volumen der mindestens einen Zelle (3) in einem Bereich von +/- 12 %, bevorzugt einem Bereich +/- 8 % und besonders bevorzugt in einem Bereich +/- 5 % in Bezug auf eine Referenz-Volumen (5) veränderbar ist.

8. Energieversorgungsvorrichtung (1) nach einem der vorhergehenden Ansprüche
**dadurch gekennzeichnet, dass**
die flexible Außenhülle (4) ein elastisches Material umfasst.

9. Energieversorgungsvorrichtung (1) nach einem der vorhergehenden Ansprüche
**dadurch gekennzeichnet, dass**
die mindestens eine Zelle (3) eine im Wesentlichen zylinder- oder quaderförmige Grundform aufweist.

10. Energieversorgungsvorrichtung (1) nach einem der vorhergehenden Ansprüche
**dadurch gekennzeichnet, dass**
die mindestens Zelle (3) eine Oberfläche A und ein Volumen V aufweisen, wobei ein Verhältnis A/V von Oberfläche zu Volumen größer ist als das Achtfache des Kehrwerts der dritten Wurzel des Volumens.

11. Energieversorgungsvorrichtung (1) nach einem der vorhergehenden Ansprüche
**dadurch gekennzeichnet, dass**
die mindestens eine Zelle (3) einen Zellkern aufweist, wobei kein Punkt innerhalb des Zellkerns mehr als 5 mm von einer Oberfläche der Energieversorgungsvorrichtung entfernt ist.

12. Energieversorgungsvorrichtung (1) nach einem der vorhergehenden Ansprüche
**dadurch gekennzeichnet, dass**
die Zelle/die Energieversorgungsvorrichtung einen Innenwiderstand DCR_I von kleiner als 10 Milliohm, bevorzugt kleiner als 8 Milliohm und am meisten bevorzugt kleiner 6 Milliohm aufweist.

13. Werkzeugmaschine (2) mit einer Energieversorgungsvorrichtung (1) nach einer der vorhergehenden Ansprüche.
